# EUROPÄISCHE PATENTSCHRIFT

(11) **EP 4 212 831 B1**
(45) Veröffentlichungstag und Bekanntmachung des Hinweises auf die Patenterteilung: **14.05.2025**
(21) Anmeldenummer: 22152046.3
(22) Anmeldetag: 18.01.2022
(51) Int. Cl.: G01F 15/18, G01F 23/284

(54) **ANORDNUNG EINES SENSORS IN EINER AUFNAHMEVORRICHTUNG MIT ZWEIFACHER RINGABDICHTUNG, SENSOR UND VERFAHREN ZUR MONTAGE EINES SENSORS**
SENSOR ARRANGEMENT IN A HOLDING DEVICE WITH DUAL RING SEALING DEVICE, SENSOR AND METHOD FOR MOUNTING A SENSOR
AGENCEMENT D'UN CAPTEUR DANS UN DISPOSITIF DE RÉCEPTION À DOUBLE JOINT TORIQUE, CAPTEUR ET PROCÉDÉ DE MONTAGE D'UN CAPTEUR

(43) Veröffentlichungstag der Anmeldung: 19.07.2023
(73) Patentinhaber: VEGA Grieshaber KG, 77709 Wolfach (DE)
(72) Erfinder: Lenk, Fritz, 77761 Schiltach (DE)
(74) Vertreter: Patentanwälte Bauer Vorberg Kayser

(56) Entgegenhaltungen:
- DE-A1- 102016 123 218
- DE-A1- 102016 212 220
- US-A1- 2018 113 020
- US-B2- 11 112 326
- US-B2- 8 890 759

## Beschreibung

Die Erfindung betrifft eine Anordnung eines Sensors in einer Aufnahmevorrichtung gemäß Patentanspruch 1. Die Erfindung betrifft ferner einen Sensor gemäß Patentanspruch 9 und ein Verfahren zur Montage eines Sensors in einer Aufnahmevorrichtung gemäß Patentanspruch 12.

Aus dem Stand der Technik sind viele verschiedene Arten von Sensoren bekannt. Vorliegend geht es insbesondere um einen Sensor zur Erfassung einer Eigenschaft von Füllgut in einem Behälter oder Rohr, insbesondere um einem Drucksensor, Grenzstandsensor oder Füllstandsensor.

Aus der Praxis sind verschiedene Möglichkeiten zur Befestigung eines Sensors an einem Behälter bekannt. Üblicherweise weist der Sensor einen sogenannten Prozessanschluss auf, um den Sensor mittelbar oder unmittelbar an dem Behälter zu befestigen. Zur Befestigung wird der Sensor insbesondere in eine Aufnahmevorrichtung eingeführt, um eine Behälterwand zu durchragen.

Im Bereich der Lebensmitteltechnik oder der pharmazeutischen Industrie herrschen hohe Anforderungen an die Hygiene. Dabei muss mit besonders hoher Sicherheit verhindert werden, dass in ein Behälter eingefülltes Füllgut verunreinigt wird. Als Einfallstor für Verunreinigungen ist insbesondere der Bereich zwischen einem Sensor und einer vorstehend genannten Aufnahmevorrichtung denkbar. Üblicherweise sind zwischen dem Sensor und der Aufnahmevorrichtung eine oder mehrere Dichtungen zum Abdichten gegen den durch Gase oder Füllstand bewirkten Druck eingesetzt, und um zu vermeiden, dass Verunreinigungen von außen zwischen dem Sensor und die Aufnahmevorrichtung Prozessanschluss in Richtung des Behälterinneren gelangen.

Aus US 11,112,326 B2 ist eine Anordnung aus einem Messgerät und einem Behälter bekannt, wobei zwischen einem Innenkonusabschnitt und einem Außenkonusabschnitt ein separates Dichtelement angeordnet ist.

Aus DE 10 2016 123 218 A1 ist ein Druckaufnehmer mit einem Prozessanschluss bekannt, wobei in einem Spalt eine Prozessdichtung angeordnet ist.

US 2018/113020 A1 offenbart eine Anordnung, bei der ein konusförmiger Abschnitt eines Prozessanschlusses eines Sensors auf einen konusförmigen Abschnitt einer Aufnahmevorrichtung aufgelegt ist.

Die zugrundeliegende Aufgabe der Erfindung ist es, eine Anordnung, einen Sensor sowie ein Verfahren zur Verfügung zu stellen, mittels welchen eine besonders sichere Abdichtung zwischen einem Sensor und einer Aufnahmevorrichtung erzielt werden kann.

Die Lösung der Aufgabe erfolgt erfindungsgemäß mit den Merkmalen der unabhängigen Ansprüche. Weitere praktische Ausführungsformen und Vorteile sind in Verbindung mit den abhängigen Ansprüchen beschrieben.

Die Erfindung betrifft eine Anordnung eines Sensors in einer Aufnahmevorrichtung. Bei dem Sensor handelt es sich insbesondere um einen Sensor zur Erfassung einer Eigenschaft eines Füllguts in einem Behälter oder Rohr, wobei im Folgenden jeweils allgemein der Begriff Behälter verwendet wird. Der Behälter weist einen Behälterinnenraum auf, in welchen Füllgut (Feststoffe, Flüssigkeiten oder Gase) einfüllbar ist.

Der Sensor dient insbesondere zur Erfassung eines Parameters des in dem Behälter eingefüllten Füllguts. Dabei kann es sich unter anderem um die Temperatur des Füllguts, den Druck im Behälter oder den Füllstand oder Grenzstand des Füllguts in dem Behälter handeln. Insbesondere handelt es sich bei dem Sensor um einen Füllstandsensor, insbesondere einen Radarsensor.

Die Aufnahmevorrichtung dient zur Anordnung des Sensors an einem Behälter. Die Aufnahmevorrichtung kann Teil des Behälters sein oder als separates Teil vorliegen. Insbesondere handelt es sich bei der Aufnahmevorrichtung um einen Hygieneadapter in Form eines Klemm-, Schweiß-, Flansch- oder Einschraubstutzens. Insbesondere ist die Aufnahmevorrichtung aus Metall. Unter dem Begriff Aufnahmevorrichtung werden in der vorliegenden Anmeldung auch separate Komponenten verstanden, die den Prozessanschluss des Sensors an eine Aufnahmevorrichtung der Prozessumgebung adaptieren, d.h. anpassen. Bspw. kann der Prozessanschluss als Einschraubgewinde ausgebildet sein und mittels der Aufnahmevorrichtung ein Anschluss bspw. an ein anderes Einschraubgewinde oder eine Clamp-Aufnahmevorrichtung bewerkstelligt werden.

Die Aufnahmevorrichtung weist eine Durchgangsöffnung auf, in welche der Sensor einführbar ist. Der Sensor weist einen Prozessanschluss auf, der zumindest teilweise innerhalb der Durchgangsöffnung angeordnet ist. Als Prozessanschluss wird der Teil eines Sensors bezeichnet, mit dem dieser in einer Prozessumgebung anordenbar ist. Der Prozessanschluss stellt damit die mechanische Schnittstelle zwischen Sensor und Prozessumgebung dar. Insbesondere weist der Prozessanschluss ein Außengewinde zur Verschraubung mit einem Innengewinde der Aufnahmevorrichtung auf.

Die Aufnahmevorrichtung weist in einem Teilbereich der Durchgangsöffnung einen Innenkonus auf. Mit Innenkonus ist dabei eine Geometrie gemeint, in welcher die Innenfläche der Durchgangsöffnung einen abnehmenden Durchmesser aufweist. Insbesondere nimmt der Durchmesser ausgehend von einem zum Prozess weisenden Ende der Aufnahmevorrichtung ab. Der Prozessanschluss weist in einem Teilbereich einen Außenkonus auf, der korrespondierend zum Innenkonus der Aufnahme ausgebildet ist und mit diesem zur Anlage kommt. Die beiden Konusflächen bilden eine Kontaktfläche. Der Prozessanschluss weist mit anderem Worten an seiner Außenfläche einen Bereich auf, dessen Durchmesser zunimmt. Vorliegend nimmt der Durchmesser insbesondere ausgehend von einem zum Prozess gewandten Ende zu.

Bei dem Innenkonus und dem Außenkonus kann es sich um gerade, stetig im Durchmesser zunehmende verlaufende Flächen handeln. Es ist aber auch denkbar, dass der Innenkonus und korrespondierend dazu der Außenkonus ballig ausgebildet sind.

Insbesondere weist der Prozessanschluss ein Außengewinde auf und der Außenkonus ist auf der zum Prozess weisenden Seite des Außengewindes angeordnet. Korrespondierend dazu weist die Aufnahmevorrichtung ein Innengewinde auf und der Innenkonus ist auf der zum Prozess weisenden Seite des Innenkonus angeordnet.

Erfindungsgemäß weist der Außenkonus zwei Abschnitte auf, wobei ein erster Abschnitt und ein zweiter Abschnitt aus unterschiedlichen Materialien ausgebildet sind. Insbesondere werden diese beiden Abschnitte durch unterschiedliche Bauteile gebildet. Die beiden Abschnitte sind insbesondere direkt benachbart. Vorzugsweise bilden die beiden Abschnitte eine ebene und durchgängige Außenkonusfläche.

Der Vorteil der erfindungsgemäßen Anordnung ist, dass bei dem Verbinden des Sensors mit der Aufnahmevorrichtung (z.B. durch Einschrauben oder durch Klemmen) die beiden korrespondieren Konusflächen miteinander zur Anlage kommen und gegeneinander verpresst werden. Durch die beiden Abschnitte aus unterschiedlichem Material kann eine unabhängige Optimierung der beiden Abschnitte erfolgen und eine besonders gute Abdichtung im Bereich der korrespondierenden Konusflächen erzielt werden. Dieses Dichtungskonzept mit unterschiedlichen Materialpaarungen mit verschiedenen Dichtungseigenschaften erhöht die Sicherheit der Abdichtung. Die beiden Dichtungspaare unterscheiden sich insbesondere hinsichtlich ihrer thermischen und dynamischen Eigenschaften. Insbesondere kann eine sonst vorgesehene separate Dichtung in Form eines Dichtrings o.ä. entfallen. Hier wird ein unmittelbarer Kontakt ausgebildet, der weniger Spalte aufweist bzw. vollständig Totraumfrei ist. Es wird vermieden, dass sich Ablagerungen des Füllguts selbst in Freiräumen und/oder Toträumen sammeln können und anschließend bei Unterdruck im Behälter gegebenenfalls in das im Behälter befindliche Füllgut gelangen. Diese Ablagerungen können, wenn diese längere Zeit in dem Freiraum oder Totraum verbleiben, das Füllgut verunreinigen oder sogar verderben.

In einer praktischen Ausführungsform der erfindungsgemäßen Anordnung ist der erste und insbesondere ein vorderer, in Richtung des Prozesses weisender Abschnitt des Außenkonus aus einem dielektrischem Material ausgebildet. Bei dem dielektrischen Material kann es sich insbesondere um PEEK, PTFE, PPS, Keramik oder Glas handeln. Wenn das dielektrische Material eine gewisse Elastizität aufweist, wie z.B. bei Verwendung von PEEK, PTFE oder PPS, kann dieses besonders gut an den Innenkonus der Aufnahmevorrichtung gepresst werden und es ergibt sich eine besonders dichte Verbindung bzw. Ringabdichtung zwischen dem Prozessanschluss und der Aufnahmevorrichtung. Die Aufnahmevorrichtung ist insbesondere aus Metall und stellt ein stabiles Widerlager für das dielektrische Material dar.

Insbesondere ist der erste Abschnitt mit dem dielektrischen Material Teil einer Linse. Alternativ kann der Abschnitt mit dem dielektrischen Material Teil einer Hornantenne sein. Es handelt sich bei dem Sensor insbesondere um ein Radarmessgerät, bspw. ein Radarfüllstandmessgerät, das nach dem Laufzeitprinzip einen Füllstand eines in einem Behälter befindlichen Füllguts, insbesondere von Flüssigkeiten und Schüttgütern detektiert. Das Radarfüllstandmessgerät ist insbesondere mit einer Hornantenne und/oder einer Linse ausgestattet, über die ein eingekoppeltes HF-Signal in Richtung des Füllgutes abgestrahlt und von diesem reflektiert wird. In einem kombinierten Sende- und Empfangssystem des Radarfüllstandmessgerätes werden die vom Füllgut reflektierten Signale erfasst und ausgewertet. Zur Strahlformung ist es bekannt, dass solche Hornantennen an einem in Hauptabstrahlrichtung eines Antennenhorns vorderseitigen Endes eine dielektrische Linse aufweisen können. Die sich im Antennenhorn im Wesentlichen kugelsegmentförmig ausbreitenden elektromagnetischen Wellen werden auf diese Weise in möglichst parallele und sich in Hauptabstrahlrichtung ausbreitende Wellenfronten überführt und so eine Richtwirkung der Antenne erzielt. Sowohl die Linse als auch die Hornantenne sind üblicherweise aus dielektrischem Material gebildet, so dass es besonders praktisch ist, diese direkt als Teil des Prozessanschlusses zu verwenden.

In einer praktischen Ausführungsform der erfindungsgemäßen Anordnung ist der zweite, und insbesondere hintere, dem Prozess abgewandte Abschnitt aus einem Metall ausgebildet. In Verbindung mit dem ersten Abschnitt aus dielektrischen Material ergeben sich damit zwei benachbarte Ringabdichtungen unterschiedlicher Materialpaare. Ausgehend vom Prozess wird die Abdichtung insbesondere zuerst durch eine Kombination aus dem dielektrischen Material (sensorseitig) und Metall (auf Seiten der Aufnahmevorrichtung) realisiert und unmittelbar daran anschließend durch eine Materialpaarung aus Metall und Metall. Dieses Dichtungskonzept mit unterschiedlichen Materialpaarungen mit verschiedenen Dichtungseigenschaften erhöht die Sicherheit der Abdichtung.

Insbesondere ist der zweite Abschnitt durch das Gehäuse des Sensors gebildet. Das Gehäuse des Sensors kann ein- oder mehrteilig ausgebildet sein und dient in der Regel dem Schutz der in dem Gehäuse angeordneten Komponenten, bspw. einer Elektronik zur Signalverarbeitung und einem optionalen Anzeige- und/oder Bedienmodul. Dass der vordere Teil des Gehäuses als Prozessanschluss ausgebildet ist, bedeutet, dass der vordere Teil des Sensors so ausgebildet ist, dass dieses mit einer Prozessumgebung verbindbar ist. Der Prozessanschluss kann mit dem Gehäuse einstückig ausgebildet, oder mit diesem verbunden sein. Hier bildet ein Teil des Prozessanschlusses einen Abschnitt des Außenkonus. Insbesondere ist dieser Teil des Gehäuses aus einem für die Prozessumgebung geeignet ausgewählten, bspw. mechanisch und chemisch beständigen Material, bspw. einem geeignet legierten Edelstahl wie 1.4404 (316L) oder 2.4602 (Hastelloy C-22) gefertigt.

Der metallische Abschnitt des Außenkonus kann außenseitig mit einer Abriebbeschichtung versehen sein, zum Beispiel mit Silber. Dies verhindert ein Fressen der sich berührenden und aufeinander reibenden Metallflächen (Prozessanschluss und Aufnahmevorrichtung). Durch die zum Prozess gewandte Dichtungsfläche aus dielektrischem Material wird verhindert, dass Abrieb in den Behälter und das darin angeordnete Füllgut gelangen kann.

In einer weiteren praktischen Ausführungsform der erfindungsgemäßen Anordnung weist der Außenkonus in Bezug auf die Axialrichtung einen kleineren Winkel auf als der Innenkonus. Damit wird besondere viel Druck auf die zum Prozess hin orientierten Bereiche ausgeübt und hier eine besonders gute Dichtwirkung erzielt. Insbesondere beträgt der Öffnungswinkel des Außenkonus 40° und der Öffnungswinkel des Innenkonus beträgt 42°. Der Winkel ist über die zweiteilige Außenkonusfläche insbesondere durchgängig gleich.

Es kann auch vorgesehen sein, dass die Konusfläche des Außenkonus nicht stetig verläuft, sondern der zweite Abschnitt am Übergang der beiden Abschnitte einen größeren Durchmesser aufweist als der erste Abschnitt. In diesem Fall ragt der zweite Abschnitt in radialer Richtung weiter hervor als der erste Abschnitt. Dies ist zum Beispiel vorteilhaft, wenn der erste Bereich aus einem dielektrischen Material ist, welches wie Keramik oder Glas nicht elastisch verformbar sind. Es wird beim Montieren des Sensors in der Aufnahmevorrichtung zunächst der zweite, überstehende Abschnitt verpresst, so lange bis auch der erste Abschnitt an der Aufnahmevorrichtung anliegt und eine doppelte Ringabdichtung erzielt ist.

Insbesondere bilden der Sensor und korrespondierend dazu die Aufnahmevorrichtung einen Anschlag, der die maximale Einführtiefe des Sensors in die Aufnahmevorrichtung begrenzt. Dazu kann der Sensor und insbesondere das Gehäuse des Sensors außenseitig einen Absatz aufweisen, der radial gegenüber der Durchgangsöffnung der Aufnahmevorrichtung hervorragt und an einer Stirnfläche der Aufnahmevorrichtung anschlägt. Durch den Anschlag wird eine Kraft definiert, mit welcher die beiden Konusflächen aufeinandergepresst werden und welche eine optimale Dichtwirkung erzeugt. Alternativ kann auch eine definierte Einschraubkraft (Drehmoment) angegeben werden, mit der der Sensor mit dem Prozessanschluss in die Aufnahmevorrichtung geschraubt werden soll.

Die Erfindung betrifft auch einen Sensor mit einem Prozessanschluss zur Montage des Sensors in einer Aufnahmevorrichtung, wobei der Prozessanschluss einen Außenkonus aufweist, der mindestens zwei Abschnitte aufweist, die aus unterschiedlichem Material ausgebildet sind. Wie vorstehend bereits erläutert, ermöglicht dies zum einen eine doppelte Ringabdichtung mit zwei unterschiedlichen Materialpaarungen und zum anderen ein Verzicht auf separate Dichtungen. Ein solcher Sensor kann besonders gut in abdichtender Weise in einer Aufnahmevorrichtung mit einer Durchgangsöffnung angeordnet werden.

Der erste, insbesondere vordere, zum Prozess gewandte Abschnitt ist insbesondere aus einem dielektrischen Material ausgebildet. Der zweite, insbesondere hintere, dem Prozess abgewandte Abschnitt ist insbesondere aus einem Metall ausgebildet. Insbesondere ist der zweite Abschnitt durch ein Gehäuse des Sensors gebildet. Insbesondere ist der erste Abschnitt durch eine Linse oder eine Hornantenne gebildet.

Vorzugsweise sind die beiden Abschnitte direkt benachbart und bilden eine durchgängige, ebene Außenkonusfläche.

Der Öffnungswinkel des Außenkonus beträgt insbesondere 40° und erstreckt sich auch über die beiden Abschnitte hinweg.

Die Erfindung betrifft ferner ein Verfahren zur Anordnung eines Sensors in einer Aufnahmevorrichtung. Insbesondere die Anordnung eines wie vorstehend beschriebenen Sensors. Beim Einführen des Sensors in eine Durchgangsöffnung der Aufnahmevorrichtung werden ein Innenkonus der Aufnahmevorrichtung und ein Außenkonus des Sensors zur Anlage gebracht und ein erster Abschnitt, insbesondere aus dielektrischem Material, und ein zweiter Abschnitt, insbesondere aus Metall, des Außenkonus werden an den Innenkonus gepresst und so eine zweifache ringförmige Abdichtung (Ringabdichtung) erzeugt. In Bezug auf die Vorteile in Zusammenhang mit dem Verfahren wird auf die vorstehende Beschreibung verwiesen.

Die maximale Einführtiefe des Sensors in die Durchgangsöffnung der Aufnahmevorrichtung ist insbesondere durch einen Anschlag und/oder eine maximale Einschraubkraft definiert. Dadurch ist ebenfalls auf einfache Weise die Anpresskraft der beiden korrespondierenden Konusflächen zueinander definiert.

Weitere praktische Ausführungsformen und Vorteile sind in Verbindung mit den Zeichnungen beschrieben. Es zeigen:
- Fig. 1: eine Anordnung mit einem Sensor und einer Aufnahmevorrichtung in einem Querschnitt,
- Fig. 2: den mit II gekennzeichneten Bereich aus Fig. 1 in einer vergrößerten Darstellung im Querschnitt und
- Fig. 3: den mit III gekennzeichneten Bereich aus Fig.2 in einer vergrößerten Darstellung im Querschnitt.

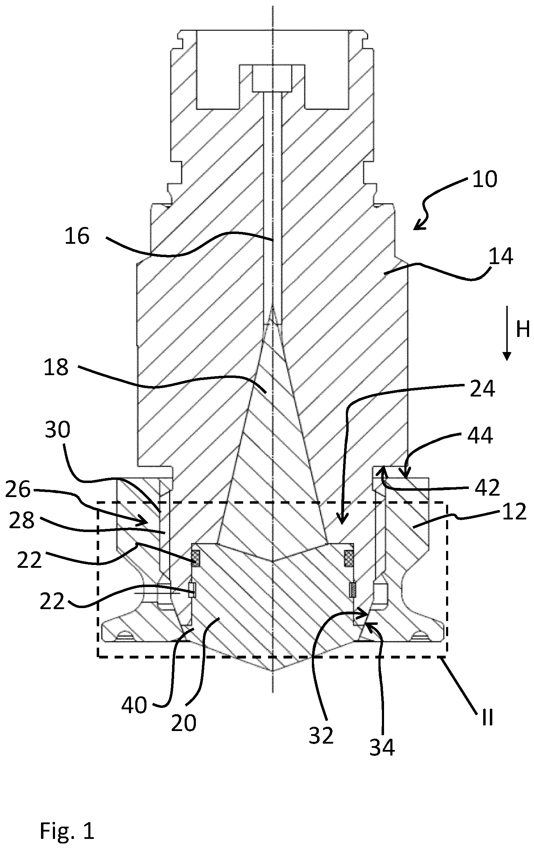

In Fig. 1 ist eine Anordnung aus einem Sensor 10 und einer Aufnahmevorrichtung 12 gezeigt. Die Aufnahmevorrichtung 12 ist hier als separates Bauteil dargestellt und dient zur Anbindung des Sensors 10 an einen Behälter (nicht dargestellt).

Bei dem Sensor 10 handelt es sich um ein Radarmessgerät zur Bestimmung eines Füllstandes in einem Behälter. Der Sensor 10 weist ein Gehäuse 14 auf, welches hier aus Metall ist. In einem dem Prozess abgewandten oberen Teil des Gehäuses 14 ist eine Elektronik (nicht dargestellt) anordenbar, unter anderem auch eine Sende- und Empfangseinheit zur Erzeugung von Radarstrahlen. Die Radarstrahlen breiten sich in Hauptemissionsrichtung E in Richtung Prozess aus, durch einen in dem Gehäuse 14 ausgebildeten Hohleiter 16. In dem Gehäuse 14 ist ferner eine Hornantenne 18 angeordnet, welche hier vollständig aus einem dielektrischen Material ausgebildet ist. In Hauptabstrahlrichtung E anschließend an die Hornantenne 18 ist eine separate Linse 20 an dem Gehäuse 14 angeordnet. Die Linse 20 ist ebenfalls aus einem dielektrischen Material. Die Linse 20 ist in einer Öffnung in dem Gehäuse 14 angeordnet. Das Innere des Gehäuses 14 ist über Dichtungen 22 zwischen der Linse 20 und dem Gehäuse 14 abgedichtet. Die Linse 20 ist in der gezeigten Ausführungsform konvex ausgebildet. Es ist aber auch eine konkave oder plane Geometrie der Linse 20 denkbar.

Der Sensor 10 ist hier in einer Aufnahmevorrichtung 12 angeordnet, wobei die Aufnahmevorrichtung 12 eine Durchgangsöffnung 24 aufweist, in welcher der Sensor 10 teilweise angeordnet ist.

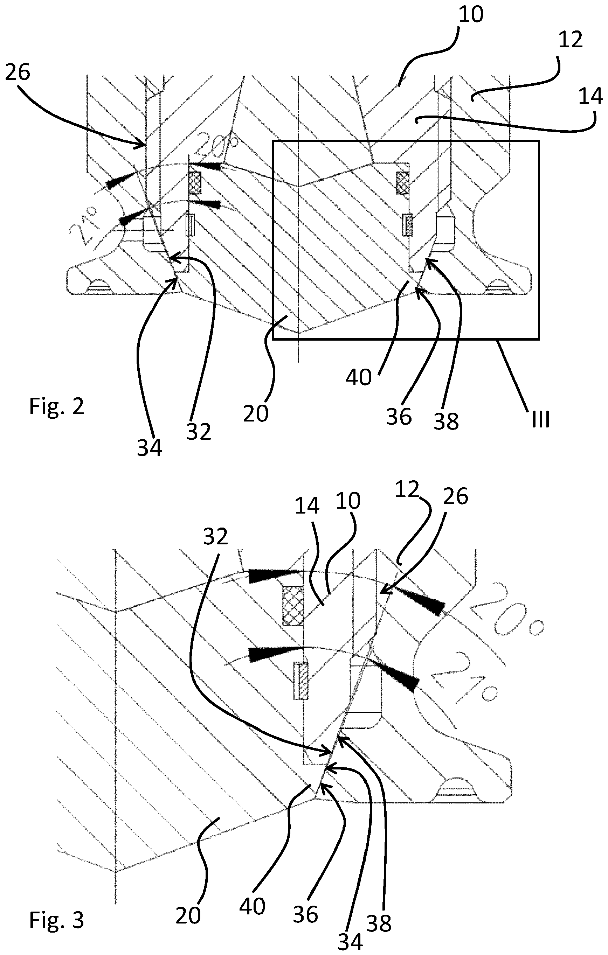

Der Bereich des Sensors 10, welcher zur Verbindung mit der Aufnahmevorrichtung 12 dient, wird als Prozessanschluss 26 bezeichnet. Vorliegend weist der Prozessanschluss 26 ein Außengewinde 28 auf, welches in einem korrespondierenden Innengewinde 30 in der Aufnahmevorrichtung 12 angeordnet ist (vgl. auch Fig. 2 und 3).

An dem zum Prozess weisenden Ende der Aufnahmevorrichtung 12 weist die Aufnahmevorrichtung 12 einen Innenkonus 32 auf. Der Innenkonus 32 ist auf der zum Prozess weisenden Seite des Innengewindes 30 angeordnet. Korrespondierend dazu weist der Sensor 10 einen Außenkonus 34 auf. Der Außenkonus 34 ist auf der zum Prozess weisenden Seite des Außengewindes 28 angeordnet. Der Außenkonus 34 des Sensors 10 weist zwei Abschnitte 36, 38 auf (vgl. Fig. 2 und Fig. 3). Einen ersten Abschnitt 36, der hier einen vorderen, dem Prozess zugewandten Abschnitt 36 bildet und einen zweiten Abschnitt 38, der hier einen hinteren, dem Prozess abgewandten Abschnitt 38 bildet. Der erste Abschnitt 36 und der zweite Abschnitt 38 grenzen unmittelbar aneinander an. Die beiden Abschnitte 36, 38 bilden eine durchgehenden und ebenen Außenkonus 34.

Der erste Abschnitt 36 ist aus einem dielektrischen Material ausgebildet, hier aus PEEK. Der erste Abschnitt 36 ist in der gezeigten Ausführungsform von einem Teil der Linse 20 gebildet. Der zweite, hintere Abschnitt 38 ist durch das Gehäuse 14 gebildet und ist vorliegend aus Metall. Die Aufnahmevorrichtung 12 ist ebenfalls aus Metall.

Der Innenkonus 32 und der Außenkonus 34 liegen aneinander an. Der Außenkonus 34 liegt mit beiden Abschnitten 36, 38 und mit zwei Materialien an dem Innenkonus 32 an. Der erste Abschnitt 36 aus dem dielektrischen Material ist hier elastisch verformbar und ist bei einer Verbindung des Sensors 10 mit der Aufnahmevorrichtung (durch Einschrauben) mit dem gegenüberliegenden Metall des Innenkonus 32 verpresst. Insgesamt ergibt sich durch die Materialpaare dielektrisches Material/Metall und Metall/Metall eine zweifache und somit eine besonders gute Ringabdichtung.

Die Linse 20 weist einen Kragen 40 auf, der gegenüber dem Umfang der benachbarten Bereiche hervorragt und dessen freies Ende den ersten Abschnitt 36 bildet. Der Kragen 40 kann auch als eine Art Mitnehmer angesehen werden, an dem das Gehäuse 14 anliegt und auf den bei einem Einschrauben des Sensors 10 in die Aufnahmevorrichtung 14 eine Kraft nach unten in Richtung Prozess wirkt.

Wie in den Fig. 2 und 3 erkennbar ist, weist der Außenkonus 34 einen Öffnungswinkel von 40° bzw. einen halben Öffnungswinkel von 20° (bezogen auf die Axialrichtung) auf. Der Innenkonus 34 weist einen Öffnungswinkel von 42° bzw. einen halben Öffnungswinkel von 21° auf.

Um die maximale Einführtiefe des Sensors 10 in die Aufnahmevorrichtung 12 und die maximale Einpresskraft auf die Konusflächen 32, 34 zu definieren, weist das Gehäuse 14 einen Anschlag 42 in Form eines Vorsprungs auf, der einen größeren Durchmesser aufweist als die Durchgangsöffnung 24 der Aufnahmevorrichtung 14. Der Vorsprung 42 schlägt bei maximaler Einführtiefe an der Stirnseite 44 der Aufnahmevorrichtung 12 an.

Beim Einführen des Sensors 10 in die Durchgangsöffnung 12 befindet sich der Prozessanschluss 26 in der Durchgangsöffnung 24. Der Innenkonus 32 der Durchgangsöffnung 24 und der Außenkonus 34 des Prozessanschluss 26 kommen dann zur Anlage. Durch das Einschrauben bewegt sich der Sensor 10 relativ zu der Aufnahmevorrichtung 12 in Richtung des Prozesses, sodass eine Kraft auf die Konusflächen 32, 34 ausgeübt wird. An den aneinander anliegenden Konusflächen 32, 34 mit den Materialpaarungen dielektrisches Material/Metall und Metall/Metall ergeben sich dann zwei hintereinanderliegende Ringabdichtungen unterschiedlicher Eigenschaften.

### Bezugszeichenliste

- 10: Sensor
- 12: Aufnahmevorrichtung
- 14: Gehäuse
- 16: Hohlleiter
- 18: Hornantenne
- 20: Linse
- 22: Dichtung
- 24: Durchgangsöffnung
- 26: Prozessanschluss
- 28: Außengewinde (Prozessanschluss)
- 30: Innengewinde (Aufnahmevorrichtung)
- 32: Innenkonus (Aufnahmevorrichtung)
- 34: Außenkonus (Prozessanschluss)
- 36: erster Abschnitt
- 38: zweiter Abschnitt
- 40: Kragen
- 42: Anschlag
- 44: Stirnseite

- E: Hauptemissionsrichtung

## Patentansprüche

1. Anordnung eines Sensors (10) in einer Aufnahmevorrichtung (12), wobei die Aufnahmevorrichtung (12) eine Durchgangsöffnung (24) aufweist und wobei der Sensor (10) einen Prozessanschluss (26) aufweist, der zumindest teilweise innerhalb der Durchgangsöffnung (24) angeordnet ist, **dadurch gekennzeichnet, dass**
die Aufnahmevorrichtung (12) in einem Teilbereich der Durchgangsöffnung (24) einen Innenkonus (32) aufweist und der Prozessanschluss (26) in einem Teilbereich einen Außenkonus (34) aufweist, der korrespondierend zum Innenkonus (32) der Aufnahmevorrichtung (12) ausgebildet ist und mit diesem zur Anlage kommt, wobei der Außenkonus (34) einen ersten Abschnitt (36) und einen zweiten Abschnitt (38) aufweist,
**dadurch gekennzeichnet, dass**
der erste Abschnitt (36) und der zweite Abschnitt (38) aus unterschiedlichen Materialien ausgebildet sind.

2. Anordnung nach dem vorstehenden Anspruch,
**dadurch gekennzeichnet, dass**
der erste Abschnitt (36) aus einem dielektrischen Material ausgebildet ist.

3. Anordnung nach einem der vorstehenden Ansprüche,
**dadurch gekennzeichnet, dass**
der erste Abschnitt (36) Teil einer Linse (20) ist.

4. Anordnung nach einem der vorstehenden Ansprüche,
**dadurch gekennzeichnet, dass**
der zweite Abschnitt (38) aus Metall ausgebildet ist.

5. Anordnung nach dem vorstehenden Anspruch,
**dadurch gekennzeichnet, dass**
der zweite Abschnitt (38) von einem Gehäuse des Sensors gebildet ist.

6. Anordnung nach einem der beiden vorstehenden Ansprüche,
**dadurch gekennzeichnet, dass**
das Metall außenseitig mit einer Abriebbeschichtung versehen ist.

7. Anordnung nach einem der vorstehenden Ansprüche,
**dadurch gekennzeichnet, dass**
der Außenkonus (34) in Bezug auf die Axialrichtung einen kleineren Winkel aufweist als der Innenkonus (32).

8. Anordnung nach einem der vorstehenden Ansprüche,
**dadurch gekennzeichnet, dass**
der Sensor (10) und korrespondierend dazu die Aufnahmevorrichtung (12) einen Anschlag (42) bilden, der die maximale Einführtiefe des Sensors (10) in die Aufnahmevorrichtung (12) begrenzt.

9. Sensor für eine Anordnung gemäß einem der vorstehenden Ansprüche 1 bis 8, mit einem Prozessanschluss (26) zur Montage des Sensors (10) in einer Aufnahmevorrichtung (12), wobei der Prozessanschluss (26) einen Außenkonus (34) aufweist und wobei der Außenkonus (34) einen ersten Abschnitt (36) und einen zweiten Abschnitt (38) aufweist, die aus unterschiedlichen Materialien ausgebildet sind.

10. Sensor nach dem vorstehenden Anspruch,
**dadurch gekennzeichnet, dass**
der erste Abschnitt (36) aus einem dielektrischen Material ausgebildet ist.

11. Sensor nach einem der beiden vorstehenden Ansprüche,
**dadurch gekennzeichnet, dass**
der zweite Abschnitt (38) aus Metall ausgebildet ist.

12. Verfahren zur Montage eines Sensors (10) in einer Aufnahmevorrichtung (12) mit einer Durchgangsöffnung (24), wobei beim Einführen des Sensors (10) in die Aufnahmevorrichtung (12) ein Innenkonus (32) der Aufnahmevorrichtung (12) und ein Außenkonus (34) des Sensors (10) aneinander anliegend angeordnet werden und ein erster Abschnitt (36) und ein zweiter Abschnitt (38) des Außenkonus (34) an den Innenkonus (32) gepresst werden und so eine zweifache ringförmige Abdichtung erzeugt wird,
**dadurch gekennzeichnet, dass** der erste Abschnitt und der zweite Abschnitt aus unterschiedlichen Materialien ausgebildet sind.

13. Verfahren nach dem vorstehenden Anspruch, **dadurch gekennzeichnet, dass** die maximale Einführtiefe des Sensors (10) in die Aufnahmevorrichtung (12) durch einen Anschlag (42) und/oder eine maximale Einschraubkraft definiert ist.

## Claims

1. Arrangement of a sensor (10) in a holding device (12), wherein the holding device (12) has a passage opening (24) and wherein the sensor (10) has a process connection (26) which is arranged at least partially within the passage opening (24), wherein the holding device (12) has an internal taper (32) in a sub-region of the passage opening (24) and the process connection (26) has an external taper (34) in a sub-region, which is constructed in a manner corresponding to the internal taper (32) of the holding device (12) and comes to bear against the same, wherein the external taper (34) has a first section (36) and a second section (38),
**characterized in that**
the first section (36) and the second section (38) are constructed of different materials.

2. Arrangement according to the preceding claim,
**characterized in that**
the first section (36) is constructed from a dielectric material.

3. Arrangement according to one of the preceding claims,
**characterized in that**
the first section (36) is part of a lens (20).

4. Arrangement according to one of the preceding claims,
**characterized in that**
the second section (38) is constructed from metal.

5. Arrangement according to the preceding claim,
**characterized in that**
the second section (38) is formed by a housing of the sensor.

6. Arrangement according to one of the two preceding claims,
**characterized in that**
the metal is provided with an abrasion coating on the outside.

7. Arrangement according to one of the preceding claims,
**characterized in that**
the external taper (34) has a smaller angle in relation to the axial direction than the internal taper (32).

8. Arrangement according to one of the preceding claims,
**characterized in that**
the sensor (10) and correspondingly the holding device (12) form a stop (42) which delimits the maximum insertion depth of the sensor (10) into the holding device (12).

9. Sensor for an arrangement according to one of the preceding claims 1 to 8, with a process connection (26) for mounting the sensor (10) in a holding device (12), wherein the process connection (26) has an external taper (34) and wherein the external taper (34) has a first section (36) and a second section (38), which are constructed from different materials.

10. Sensor according to the preceding claim,
**characterized in that**
the first section (36) is constructed from a dielectric material.

11. Sensor according to one of the two preceding claims,
**characterized in that**
the second section (38) is constructed from metal.

12. Method of mounting a sensor (10) in a holding device (12) with a passage opening (24), wherein upon insertion of the sensor (10) into the holding device (12), an internal taper (32) of the holding device (12) and an external taper (34) of the sensor (10) are arranged such that they bear against one another and a first section (36) and a second section (38) of the external taper (34) are pressed against the internal taper (32), creating a double annular seal **characterized in that** the first section and second section are made of different materials.

13. Method according to the preceding claim,
**characterized in that**,
the maximum insertion depth of the sensor (10) into the holding device (12) is defined by a stop (42) and/or a maximum screw-in force.

## Revendications

1. Agencement d'un capteur (10) dans un dispositif de réception (12), dans lequel le dispositif de réception (12) présente une ouverture de passage (24) et dans lequel le capteur (10) présente un raccord de processus (26) qui est disposé au moins en partie à l'intérieur de l'ouverture de passage (24),
**caractérisé en ce que**
le dispositif de réception (12) présente un cône intérieur (32) dans une zone partielle de l'ouverture de passage (24) et le raccord de processus (26) présente dans une zone partielle un cône extérieur (34) qui est formé de manière à correspondre au cône intérieur (32) du dispositif de réception (12) et vient en appui contre celui-ci, le cône extérieur (34) présentant une première partie (36) et une deuxième partie (38),
**caractérisé en ce que**
la première partie (36) et la deuxième partie (38) sont réalisées dans des matériaux différents.

2. Agencement selon la revendication précédente, **caractérisé en ce que** la première partie (36) est réalisée à partir d'un matériau diélectrique.

3. Agencement selon l'une quelconque des revendications précédentes, **caractérisé en ce que** la première partie (36) fait partie d'une lentille (20).

4. Agencement selon l'une quelconque des revendications précédentes, **caractérisé en ce que** la deuxième partie (38) est réalisée à partir d'un métal.

5. Agencement selon la revendication précédente, **caractérisé en ce que** la deuxième partie (38) est formée par un boîtier du capteur.

6. Agencement selon l'une quelconque des deux revendications précédentes, **caractérisé en ce que** le métal est pourvu côté extérieur d'un revêtement anti-abrasion.

7. Agencement selon l'une quelconque des revendications précédentes, **caractérisé en ce que** le cône extérieur (34) présente un angle plus petit par rapport au sens axial que le cône intérieur (32).

8. Agencement selon l'une quelconque des revendications précédentes, **caractérisé en ce que** le capteur (10) et, de manière correspondante, le dispositif de réception (12) forment une butée (42) qui limite la profondeur d'introduction maximale du capteur (10) dans le dispositif de réception (12).

9. Capteur pour un agencement selon l'une quelconque des revendications 1 à 8 précédentes, avec un raccord de processus (26) pour le montage du capteur (10) dans un dispositif de réception (12), le raccord de processus (26) présentant un cône extérieur (34) et le cône extérieur (34) présentant une première partie (36) et une deuxième partie (38) qui sont réalisées dans des matériaux différents.

10. Capteur selon la revendication précédente, **caractérisé en ce que** la première partie (36) est réalisée à partir d'un matériau diélectrique.

11. Capteur selon l'une quelconque des deux revendications précédentes, **caractérisé en ce que** la deuxième partie (38) est réalisée à partir d'un métal.

12. Procédé de montage d'un capteur (10) dans un dispositif de réception (12) avec une ouverture de passage (24), dans lequel,
lors de l'introduction du capteur (10) dans le dispositif de réception (12), un cône intérieur (32) du dispositif de réception (12) et un cône extérieur (34) du capteur (10) sont disposés en appui l'un contre l'autre, et une première partie (36) et
une deuxième partie (38) du cône extérieur (34) sont pressées contre le cône intérieur (32) et un double joint annulaire est ainsi généré, **caractérisé en ce que** la première section et la deuxième section sont réalisées à partir de matériaux différents.

13. Procédé selon la revendication précédente, **caractérisé en ce que** la profondeur d'introduction maximale du capteur (10) dans le dispositif de réception (12) est définie par une butée (42) et/ou une force de vissage maximale.
